# EUROPÄISCHE PATENTSCHRIFT

(11) **EP 1 899 034 B1**
(45) Veröffentlichungstag und Bekanntmachung des Hinweises auf die Patenterteilung: **06.10.2010**
(21) Anmeldenummer: 06742618.9
(22) Anmeldetag: 20.04.2006
(51) Int. Cl.: B01D 25/21, B01D 25/28, B01D 35/18

(54) **HEIZ- UND KÜHLBARE FILTERPLATTE**
FILTER PLATE THAT CAN BE COOLED AND HEATED
PLAQUE DE FILTRE POUVANT ETRE CHAUFFEE ET REFROIDIE

(30) Priorität: 22.04.2005 DE 202005006482 U
(43) Veröffentlichungstag der Anmeldung: 19.03.2008
(73) Patentinhaber: JVK Filtration Systems GmbH, 91166 Georgensgmünd (DE)
(72) Erfinder: HERMANN, Manfred, 90491 Nürnberg (DE)
(74) Vertreter: Tergau, Dietrich
(86) Internationale Anmeldenummer: PCT/EP2006/003615
(87) Internationale Veröffentlichungsnummer: WO 2006/111379

(56) Entgegenhaltungen:
- DE-A1- 4 136 906
- FR-A- 2 754 758
- US-A- 3 613 563

## Beschreibung

Die Erfindung betrifft eine heizbare Filterplatte, nämlich eine kombinierte Kammer- und Membranfilterplatte. Bei diesen kombinierten Kammer- und Membranfilterplatten ist die eine Plattenseite wie eine übliche Kammerfilterplatte und die andere Plattenseite wie eine Membranfilterplatte mit einer vor die Kammerplatte vorgeschalteten Membran versehen. Setzt man aus derartigen kombinierten Kammer- und Membranfilterplatten ein Filterpaket zusammen, liegen stets eine Plattenseite mit Membran und eine Plattenseite ohne Membran nebeneinander.

Derselbe Effekt kann erzielt werden durch ein Filterpaket, welches alternierend aus Kammerplatten und Membranplatten zusammengesetzt ist. Bei derartigen Filterpaketen mit alternierenden Platten ist jeweils eine Kammerfilterplatte ohne Membran neben einer Membranfilterplatte angeordnet, welche auf ihren beiden Seiten jeweils eine Membran trägt. Auf diese Weise entstehen im Filterpaket auch wieder einander benachbarte Filterkammern, welche jeweils eine Membran zum Ausstoß des Filterkuchens nach dem Filtervorgang aufweisen.

Schließlich ist es aus dem Stand der Technik bekannt, die Filterkammern zu beheizen. Hierfür wird in den von der Filterkammer her hinter der Membran liegenden Raum ein erwärmtes Fluid gepumpt, beispielsweise Heißwasser oder Dampf. Die hohe Temperatur diffundiert dann durch die Membran hindurch in die eigentliche Presskammer. Da die Beheizung jedoch nur von einer Seite der Filterkammer her, nämlich von der Membranseite her erfolgt, herrscht innerhalb der Filterkammer ein hohes Temperaturgefälle vor. Gerade bei der Verwendung von alternierenden Kammerfilterplatten einerseits und Membranfilterplatten andererseits führt dies dazu, dass die Beheizung der Filterkammer im Bereich der Kammerfilterplatte als unzureichend angesehen wird.

Aus der FR 2 754 758 A ist eine kombinierte Kammer- und Membranfilterplatte für eine Filterpresse bekannt. Die Platte umfasst einen Plattengrundkörper und einen den Plattengrundkörper umrahmenden, gegenüber diesem vorspringenden und verdickten

Plattenrand mit einer Kammerseite zur Bildung einer Filterkammer und einer Membranseite. Die Membranseite weist eine mit Abstand zum Plattengrundkörper angeordnete Membran auf, wobei die Platte eine Vielzahl von Ausnehmungen aufweist, die in mehreren Ringen konzentrisch zum Plattenmittelpunkt gruppiert sind.

Ausgehend von den genannten Nachteilen liegt der Erfindung die Aufgabe zugrunde, eine Filterplatte hinsichtlich ihrer internen Wärmeübertragung zu verbessern. Zur Lösung dieser Aufgabe wird eine kombinierte Kammer- und Membranfilterplatte verwendet. In den

Plattengrundkörper ist mindestens eine die Dicke des Plattengrundkörpers reduzierende Ausnehmung eingeformt. Aufgrund der mit der Einformung der Ausnehmung verbundenen Reduktion der Dicke des Plattengrundkörpers kann im Bereich der Ausnehmung ein Temperaturübergang vom erwärmten Fluid her durch den Plattengrundkörper hindurch auf die Kammerseite der kombinierten Filterplatte stattfinden. In vorteilhafter Weise ist in die Kammerfilterplatte eine Vielzahl von Ausnehmungen eingeformt. In vorteilhafter Weise sind mehrere Ausnehmungen nach Art von Nuten oder Rillen parallel nebeneinander eingeformt, um eine gerillte Plattenoberfläche zu realisieren. Infolge der Vielzahl der Ausnehmungen findet an vielen Stellen durch den Plattengrundkörper hindurch eine Wärmeabgabe vom erwärmten Fluid in Richtung auf die Kammerseite der kombinierten Filterplatte statt.

In vorteilhafter Ausgestaltung sind die rillenförmigen Ausnehmungen als Nuten auf der Membranseite der kombinierten Filterplatte eingeformt und verlaufen in horizontaler Richtung. Auf der Kammerseite kann eine weitere Rillung vorgesehen sein, welche in vertikaler Richtung verläuft zur Bildung von Verteilerkanälen auf der Kammerseite der kombinierten Filterplatte. Es ist evident, dass auch durch die Einformung von Verteilerkanälen die Dicke der Wandstärke des Plattenkörpers reduziert wird, so dass auch die in die Platte eingeformten Verteilerkanäle den Wärmeübergang vom Fluid zur Kammerseite hin begünstigen.

Ein weiterer Vorteil der Erfindung besteht darin, den herkömmlichen Aufbau einer Filterplatte beibehalten zu können, also die Beheizbarkeit der Filterplatte verbessern zu können, ohne ihre Konstruktion grundlegend zu ändern.

Anhand des nachfolgend beschriebenen Ausführungsbeispiels ist die Erfindung weiter erläutert. Es zeigen:
- Fig. 1: eine Draufsicht auf die Membranseite einer erfindungsmäßigen kombinierten Kammer- und Membranfilterplatte,
- Fig. 2: den Schnitt II-II zweier einem Filterpaket nebeneinander angeordneten Filter- platten gemäß Fig. 1,
- Fig. 3: eine Draufsicht auf die Kammerseite einer erfindungsmäßigen kombinierten Kammer- und Membranfilterplatte mit vertikalen Verteilerkanälen,

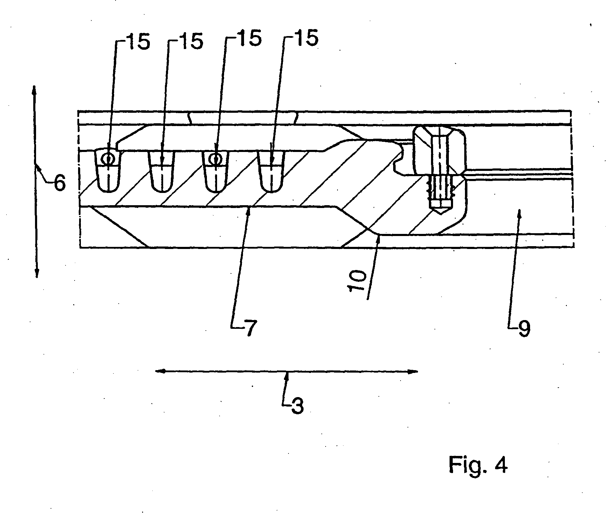

- Fig. 4: den Schnitt IV-IV aus Fig. 3.

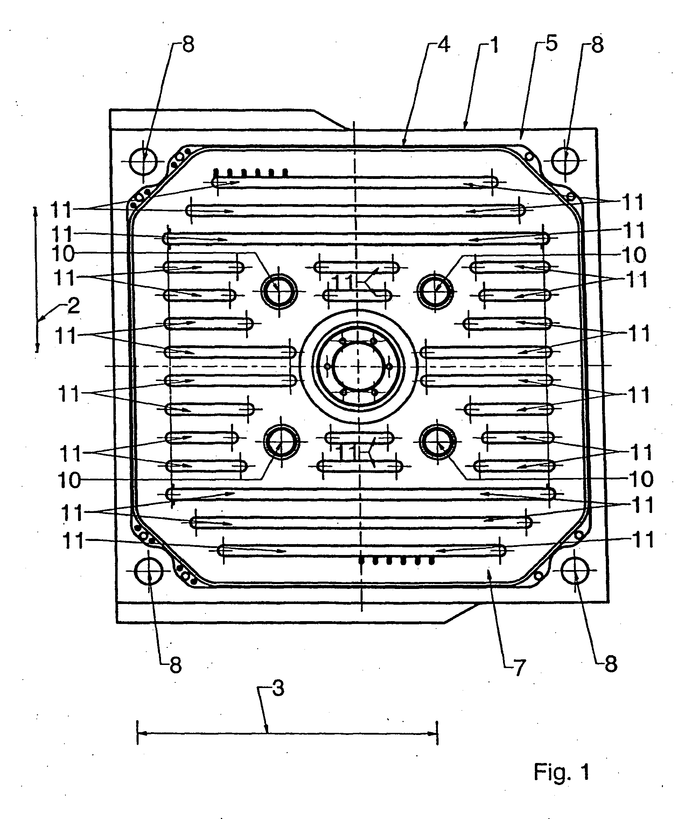

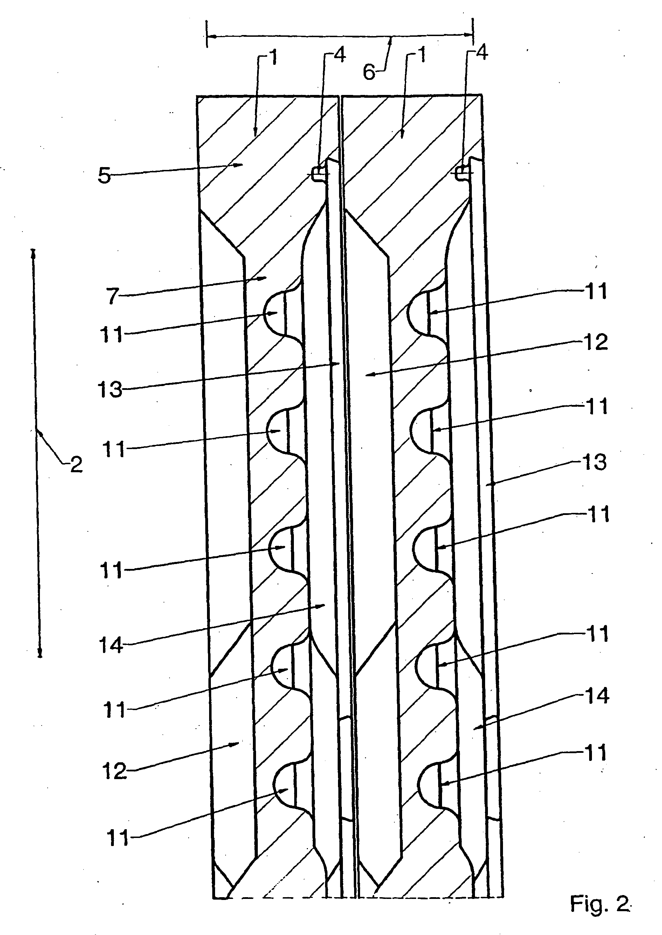

Die kombinierte Kammer- und Membranfilterplatte 1 ist im wesentlichen quadratisch, weist also in Vertikalrichtung 2 und in Horizontalrichtung 3 etwa identische Abmessungen auf. Die in Fig. 1 dargestellte Seite der kombinierten Kammer- und Membranfilterplatte 1 weist eine umlaufende Befestigungsnut 4 zur Befestigung der in Fig. 1 nicht dargestellten Membran 13 auf. Die Befestigungsnut 4 verläuft entlang dem die Kammer- und Membranfilterplatte 1 säumenden Plattenrand 5. Der Plattenrand 5 weist in der sowohl zur Vertikalrichtung 2 als auch zur Horizontalrichtung 3 senkrecht verlaufenden Querrichtung 6 eine größere Dicke auf als der vom Plattenrand 5 eingerahmte Plattengrundkörper 7. Dies ist insbesondere in Fig. 2 gut und deutlich erkennbar. In den vier Eckbereichen weist die kombinierte Kammer- und Membranfilterplatte 1 jeweils eine Ablaufbohrung 8 auf. Zentral in der Mitte der kombinierten Kammer- und Membranfilterplatte 1 ist eine Filtrateinführbohrung 9 vorgesehen. Des weiteren trägt die kombinierte Kammer- und Membranfilterplatte 1 auf ihren Plattengrundkörper 7 Stütznocken 10 zur Abstützung des Plattengrundkörpers 7 gegen den Plattengrundkörper 7 der jeweils benachbarten Filterplatte 1.

Schließlich sind in Fig. 1 erkennbar die sich in Horizontalrichtung 3 erstreckenden rillenförmigen als Nuten 11 ausgebildeten Ausnehmungen. Aus der Darstellung der Fig. 1 ist auch ersichtlich, dass die einzelnen Nuten 11 in Horizontalrichtung 3 unterschiedlich lang sind. Die horizontale Länge der Nuten 11 ist also jeweils an die speziellen Gegebenheiten der kombinierten Kammer- und Membranfilterplatte 1 anpassbar. So sind die Nuten 11 im Bereich der Stütznocken 10 oder im Bereich der Filtrateinführbohrung 9 in Horizontalrichtung 3 so gekürzt, dass eine Kollision der Bauteile nicht erfolgt. Schließlich ist die Länge der Nuten 11 auch so bemessen, dass die Stabilität des Plattengrundkörpers 7 nicht beeinträchtigt ist. Die Funktionsweise der Erfindung ist anhand der Darstellung der Fig. 2 erklärt. In Fig. 2 sind in Querrichtung 6 zwei kombinierte Kammer- und Membranfilterplatten 1 zu einem Filterpaket nebeneinander angeordnet. Die beiden Filterplatten 1 bilden eine geschlossene Filterkammer 12 zwischen sich. Die Filterkammer 12 ist zweigeteilt durch die in der Befestigungsnut 4 fixierte Membran 13.

Die Membran 13 teilt also den zwischen den Filterplatten 1 gebildeten Raum in die eigentliche Filterkammer 12 und die hinter der Membran 13 liegende Membrankammer 14. Mit anderen Worten: Infolge des kombinierten Aufbaus der Kammer- und Membranfilterplatte 1 ist im Ausführungsbeispiel auf der linken Seite stets die Filterkammer 12 in die Filterplatte 1 eingebracht, während auf der rechten Seite von der Membran 13 jeweils abgeschirmt die Membrankammer 14 realisiert ist. Des weiteren ist erkennbar, dass die Membrankammer 14 rückseitig jeweils in die Nuten 11 mündet. Über einen in Fig. 1 nicht dargestellten Kanal wird in die Membrankammer 14 das erwärmte Fluid eingeleitet. Das erwärmte Fluid füllt dann sowohl die Membrankammer 14 als auch die Nuten 11 aus. Aus der Membrankammer 14 geht die Wärme des Fluids durch die Membran 13 in die Filterkammer 12 über, welche in Querrichtung 6 neben der Membran 13 angeordnet ist. Aus den Nuten 11 geht die Wärme des Fluids ebenfalls durch den Plattengrundkörper 7 hindurch in die in Querrichtung 6 den Nuten 11 benachbarte Filterkammer 12 über. Aus der Darstellung der Fig. 2 ist deutlich erkennbar, dass der Plattengrundkörper 7 in Querrichtung 6 gesehen im Bereich der Nuten 11 eine sehr viel geringere Wanddicke aufweist als in den übrigen Bereichen. Aufgrund dieser geringeren Wanddicke in Querrichtung 6 kann die Wärme des Fluids sehr viel besser durch den Plattengrundkörper 7 in die in Querrichtung 6 daneben liegende Filterkammer 12 geleitet werden.

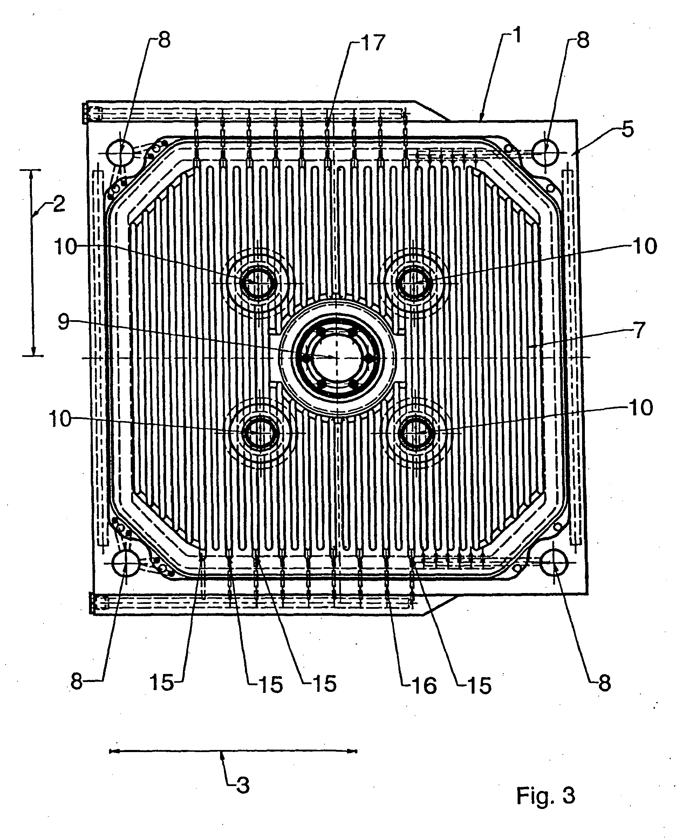

Fig. 3 zeigt die Draufsicht auf die Kammerseite einer speziellen Ausführungsform der erfinderischen kombinierten Kammer- und Membranfilterplatte 1. Auch hier springt in Querrichtung 6 der Plattenrand 5 gegenüber dem Plattengrundkörper 7 hervor. In den Plattengrundkörper 7 ist in Fig. 3 eine Vielzahl in Vertikalrichtung 2 verlaufender Verteilerkanäle 15 eingeformt. Die Verteilerkanäle 15 können an der Oberseite der Platte Zuläufe 17 bzw. an der Unterseite der Platte Abläufe 16 aufweisen.

Bezogen auf die Erfindung können auch die Verteilerkanäle 15 auf der Kammerseite der kombinierten Kammer- und Membranfilterplatte 1 die Funktion der Ausnehmungen in Bezug auf den Temperaturübergang durch den Plattengrundkörper 7 übernehmen. Es ist also möglich, die kombinierte Kammer- und Membranfilterplatte so zu gestalten, dass der Plattengrundkörper auf der der Membran 13 zugeordneten Seite glattflächig ist und nur auf der der Membran 13 abgewandten Kammerseite Vertiefungen in Form der Verteilerkanäle 15 aufweist. Ebenso gut besteht gemäß Fig. 1 die Möglichkeit, auf der der Membran 13 zugeordneten Seite Nuten 11 vorzusehen, während die der Membran 13 abgewandten Fläche des Grundkörpers 7 glatt ist. Des weiteren ist auch eine Mischform möglich mit Nuten 11 auf der Membranseite und Verteilerkanälen 15 auf der Kammerseite der kombinierten Kammer- und Membranfilterplatte 1.

### Bezugszeichenliste

- 1: Kammer- und Membranfilterplatte
- 2: Vertikalrichtung
- 3: Horizontalrichtung
- 4: Befestigungsnut
- 5: Plattenrand
- 6: Querrichtung
- 7: Plattengrundkörper
- 8: Ablaufbohrung
- 9: Filtrateinführbohrung
- 10: Stütznocken
- 11: Nut
- 12: Filterkammer
- 13: membran
- 14: Membrankammer
- 15: Verteilerkanal
- 16: Ablauf
- 17: Zulauf

## Patentansprüche

1. Kombinierte Kammer- und Membranfilterplatte (1) mit einem Plattengrundkörper (7) und einem dem Plattengrundkörper (7) umrahmenden, gegenüber dem Plattengrundkörper (7) vorspringenden und verdickten Plattenrand (5) mit einer Kammerseite zur Bildung einer Filterkammer (12) und einer Membranseite aufweisend eine mit Abstand zum Plattengrundkörper (7) adaptierte Membran (13), und mit einer Vielzahl, die Dicke des Plattengrundkörpers (7) reduzierender paralleler Ausnehmungen (11, 15) im Plattengrundkörper (7) zur Bildung einer gerillten Plattenoberfläche,
**dadurch gekennzeichnet,**
**dass** die Ausnehmungen (11,15) als Nuten (11) in die der Membran (13) zugewandte Plattenoberfläche des Plattengrundkörpers (7) eingebracht sind.

2. Kammer- und Membranfilterplatte (1) nach Anspruch 1,
**dadurch gekennzeichnet,**
**dass** die Nuten (11) in Horizontalrichtung (3) verlaufen.

3. Kammer- und Membranfilterplatte (1) nach Anspruch 1 oder 2,
**dadurch gekennzeichnet,**
**dass** die Ausnehmungen (11,15) in die der Membran (13) abgewandte Plattenoberfläche des Plattengrundkörpers (7) in Form von Verteilerkanälen (15) eingebracht sind.

4. Kammer- und Membranfilterplatte (1) nach Anspruch 3,
**dadurch gekennzeichnet,**
**dass** die Verteilerkanäle (15) in Vertikalrichtung (2) verlaufen.

5. Kammer- und Membranfilterplatte (1) nach Anspruch 3 oder 4,
**dadurch gekennzeichnet,**
**dass** die Verteilerkanäle (15) einen Ablauf (16) und/oder einen Zulauf (17) aufweisen.

## Claims

1. A combined chamber and membrane filter plate (1), having a plate base body (7) and a thickened plate edge (5) surrounding the plate base body (7) and projecting over the plate base body (7), said plate edge (5) having a chamber side for forming a filter chamber (12) and a membrane side including a membrane (13) adapted spaced from the plate base body (7) and having a plurality of parallel recesses (11, 15) in the plate base body (7), reducing the thickness of the plate base body (7), for forming a grooved plate surface,
**characterized in that**
the recesses (11, 15) are formed as grooves (11) into the plate surface, facing towards the membrane (13), of the plate base body (7).

2. The chamber and membrane filter plate (1) of claim 1,
**characterized in that**
the grooves (11) extend in horizontal direction (3).

3. The chamber and membrane filter plate (1) of claim 1 or 2,
**characterized in that**
the recesses (11, 15) are formed into the plate surface, facing away from the membrane (13), of the plate base body (7), in the form of distributor channels (15).

4. The chamber and membrane filter plate (1) of claim 3,
**characterized in that**
the distributor channels (15) extend in vertical direction.

5. The chamber and membrane filter plate (1) of claim 3 or 4,
**characterized in that**
each of the distributor channels (15) includes an outlet (16) and/or an inlet (17).

## Revendications

1. Plaque filtrante combinée à chambre et à diaphragme (1), ayant un corps de base de plaque (7) et un bord de plaque épaissi (5) entourant le corps de base de plaque (7) en saillie sur le corps de base de plaque (7), dit bord de plaque (5) ayant un côté chambre pour former une chambre filtrante (12) et un côté diaphragme comprenant un diaphragme (13) adapté à un écart du corps de base de plaque (7) et ayant une pluralité de creux en parallèle (11, 15) dans le corps de base de plaque (7), réduisant l'épaisseur du corps de base de plaque (7), pour former une surface rainurée de plaque,
**caractérisée en ce que**
les creux (11, 15) sont formés sous forme de rainures (11) dans la surface de plaque, en regard du diaphragme (13), du corps de base de plaque (7).

2. Plaque filtrante à chambre et à diaphragme (1) selon la revendication 1,
**caractérisée en ce que**
les rainures (11) s'étendent en direction horizontale (3).

3. Plaque filtrante à chambre et à diaphragme (1) selon la revendication 1 ou 2,
**caractérisée en ce que**
les creux (11, 15) sont formés dans la surface de plaque, à l'opposé du diaphragme (13), du corps de base de plaque (7), sous forme de canaux distributeurs (15).

4. Plaque filtrante à chambre et à diaphragme (1) selon la revendication 3,
**caractérisée en ce que**
les canaux distributeurs (15) s'étendent en direction verticale.

5. Plaque filtrante à chambre et à diaphragme (1) selon la revendication 3 ou 4,
**caractérisée en ce que**
les canaux distributeurs (15) comprennent chacun un orifice de sortie (16) et/ou un orifice d'entrée (17).
